# DEMANDE DE BREVET EUROPEEN

(11) **EP 3 659 986 A1**
(43) Date de publication de la demande: **03.06.2020**
(21) Numéro de dépôt: 19212994.8
(22) Date de dépôt: 02.12.2019
(51) Int. Cl.: C04B 20/10, C04B 28/06, C04B 28/04, C04B 111/34, C04B 111/27

(54) **PROCEDE POUR LA REALISATION D'UN BETON A DEMOULAGE IMMEDIAT PRODUISANT DE FAIBLES VARIATIONS DIMENSIONNELLES EN REPONSE A DES VARIATIONS HYGROMETRIQUES**

(30) Priorité: 30.11.2018 FR 1872192
(71) Demandeur: Centre d'Etudes et de Recherches de l'Industrie du Béton, 28233 Epernon (FR)
(72) Inventeur: LE THIERRY, Suzanne, 78120 Rambouillet (FR); JACQUEMOT, François, 78660 Ablis (FR); ROUGEAU, Patrick, 91440 Bures-sur-Yvette (FR)
(74) Mandataire: IP Trust

(57) **Abrégé**

L'invention concerne un procédé de réalisation d'un béton à démoulage immédiat comprenant un liant, des granulats et de l'eau, ledit procédé comprenant une étape d'imprégnation des granulats avec un produit hydrofuge suivie d'un mélange des granulats imprégnés avec le liant et l'eau, ou alternativement une étape mélange des granulats avec le liant suivie d'une étape de mélange de la composition obtenue à l'étape (i) avec un produit hydrofuge et l'eau.

## Description

### DOMAINE TECHNIQUE DE L'INVENTION

L'invention concerne le domaine des matériaux de construction et en particulier celui des bétons à démoulage immédiat.

L'invention concerne plus particulièrement un procédé de réalisation d'un béton à démoulage immédiat, et un béton obtenu selon ce procédé.

### ETAT DE LA TECHNIQUE

Les produits en béton à démoulage immédiat, et en particulier les blocs de maçonneries, sont sujets à des variations dimensionnelles induites par les variations d'hygrométrie ou de température : retrait au séchage, gonflement à l'humidité. Ces variations dimensionnelles peuvent créer des contraintes et des déformations dans la maçonnerie mise en œuvre dans un ouvrage. Si les dispositions constructives et les règles de l'art ne sont pas respectées, ces contraintes peuvent entrainer des désordres de type fissuration des blocs, des joints ou des enduits qui portent atteinte à la structure, favorisent les infiltrations d'eau et les désordres esthétiques.

Les phénomènes de gonflement et de retrait de dessiccation des bétons traditionnels à démoulage différé sont aujourd'hui bien connus et maitrisés. En revanche, leur influence dans le cas des bétons à démoulage immédiat, dont les variations dimensionnelles sont généralement plus importantes que celles des bétons traditionnels à démoulage différé, a été peu étudiée par le passé. De fait, les phénomènes de gonflement et de retrait de dessiccation sont moins bien maitrisés, ou du moins pas de manière suffisante.

Parmi les solutions connues et classiquement utilisées à l'heure actuelle pour réduire les variations dimensionnelles des produits à démoulage immédiat, il peut être cité les solutions qui sont principalement liées aux conditions de durcissement et de séchage des bétons à démoulage immédiat. Il s'agit de conserver les bétons à démoulage immédiat dans des conditions sèches (sous abri) ou d'augmenter le temps de séchage et donc le délai de livraison. Ces deux solutions entrainent cependant des coûts supplémentaires importants dans la production des bétons à démoulage immédiat.

Pour réduire le phénomène de variations dimensionnelles, une des solutions consiste à réduire le volume de pâte du béton à démoulage immédiat, et notamment à réduire le dosage en ciment. Cette solution entraine cependant une diminution de la résistance mécanique du béton.

L'invention vise à remédier à ces problèmes en proposant un procédé de réalisation de béton à démoulage immédiat permettant de réduire les variations dimensionnelles sans impacter la résistance mécanique du béton.

L'invention a également pour objet de proposer un procédé de réalisation de béton à démoulage immédiat à faible coût.

### OBJET DE L'INVENTION

A cet effet, l'invention propose un procédé de réalisation d'un béton à démoulage immédiat comprenant un liant, des granulats et de l'eau, utilisant un produit hydrofuge appliqué au préalable sur les granulats ou ajouté directement dans le béton lors du mélange.

Plus particulièrement, l'invention concerne un procédé de réalisation d'un béton à démoulage immédiat comprenant un liant, des granulats et de l'eau, ledit procédé comprenant les étapes suivantes :
(i) imprégnation des granulats avec un produit hydrofuge
(ii) mélange des granulats imprégnés avec le liant et l'eau,
(iii) mise en place dans un moule par vibro-compactage et démoulage immédiat du béton.

Par imprégnation des granulats, on entend une imprégnation au moins en surface des granulats. Une telle imprégnation en surface des granulats sera également qualifiée dans ce qui suit d'enrobage. L'opération préalable d'imprégnation des granulats avec un produit hydrofuge, avant leur mélange au liant et à l'eau permet de réduire la sensibilité des granulats et du béton aux variations d'hygrométrie ou de température rencontrées et ainsi réaliser des bétons subissant de plus faibles variations dimensionnelles après des échéances courtes de durcissement. Cela permet ainsi de s'affranchir de toutes conditions de conservation spécifique et d'utiliser les produits plus rapidement (délai de livraison à 7 jours par exemple).

Avantageusement, l'imprégnation est réalisée par malaxage des granulats et du produit hydrofuge jusqu'à l'obtention d'une répartition homogène du produit hydrofuge en surface des granulats. Par répartition homogène, on entend une répartition du produit hydrofuge sur l'ensemble des granulats de manière à au moins enrober l'ensemble des granulats ou blocs de granulats.

Il peut être prévu également de saturer partiellement en eau les granulats avant leur imprégnation avec le produit hydrofuge. La saturation en eau des granulats sera de préférence à hauteur d'au moins 50 % de leur capacité d'absorption d'eau.

Avantageusement, l'imprégnation des granulats avec le produit hydrofuge est réalisée sans opération de chauffage.

De manière alternative, l'invention propose un procédé de réalisation d'un béton à démoulage immédiat comprenant un liant, des granulats et de l'eau, ledit procédé comprenant les étapes suivantes :
(i) mélange des granulats avec le liant,
(ii) mélange d'un produit hydrofuge avec l'eau et la composition obtenue à l'étape (i),
(iii) mise en place dans un moule par vibro-compactage et démoulage immédiat du béton.

Cette alternative est ainsi basée sur le mélange de l'hydrofuge directement dans le béton frais (alternative de mélange désignée par la suite « mélange hydrofuge / béton frais ») alors que l'alternative précédemment décrite concerne le mélange en amont de l'hydrofuge avec les granulats (alternative d'imprégnation désignée par la suite « imprégnation ou enrobage »). De même que l'effet obtenu avec une opération préalable d'imprégnation des granulats avec le produit hydrofuge, l'opération de pré-mélange des granulats avec le liant seul avant une incorporation du produit hydrofuge et de l'eau permet également de réduire la sensibilité des granulats et du béton aux variations d'hygrométrie ou de température rencontrées et ainsi réaliser des bétons subissant de faibles variations dimensionnelles après des échéances courtes de durcissement. Comme précédemment, cela permet de s'affranchir de toutes conditions de conservation spécifique et d'utiliser les produits plus rapidement (délai de livraison à 7 jours par exemple).

Avantageusement, l'eau et le produit hydrofuge sont ajoutés simultanément à la composition obtenue après mélange des granulats et du liant.

Que le béton soit réalisé selon la première mise en œuvre ou selon la deuxième mise en œuvre, le procédé selon l'invention présente d'autres caractéristiques avantageuses et non limitatives de l'invention, prises seules ou en combinaison, définies ci-après.

Ainsi, le produit hydrofuge utilisé peut-être un hydrofuge de surface, de préférence à base d'oligomère polysiloxane ou un hydrofuge de masse. Il sera avantageusement ajouté selon une proportion massique de 0,2 à 1,5 % par rapport aux granulats.

Les granulats ajoutés sont avantageusement des granulats ayant un coefficient d'absorption d'eau élevé. Par coefficient d'absorption d'eau élevé des granulats, on entend un coefficient d'absorption d'eau supérieur à 3 % mesuré suivant la méthode d'essai de la norme NF EN 1097-6.

Il pourra s'agir par exemple de granulats de ponce ou pouzzolane ou de granulats recyclés.

Le liant comprend du ciment, de préférence du ciment Portland et éventuellement du ciment sulfo-alumineux. La présence de ciment sulfo-alumineux permet de réduire la sensibilité au retrait du béton. Combiné avec les opérations d'imprégnation des granulats ou de pré-mélange des granulats avant ajout du produit hydrofuge, cela permet de parvenir à une diminution des variations dimensionnelles accrues. Avantageusement, le ciment sulfo-alumineux est présent dans le liant à une teneur en masse sèche comprise entre 5 et 35%.

L'invention concerne également un produit en béton à démoulage immédiat obtenu selon l'une ou l'autre des alternatives de réalisation décrites ci-dessus.

### Exemples 1-4

Quatre séries d'éprouvettes représentatives de blocs de maçonnerie en béton à démoulage immédiat ont été réalisées selon l'alternative de mélange « mélange hydrofuge / béton frais » et l'alternative d'imprégnation « imprégnation ou enrobage » précédemment décrites. Les écarts relatifs de variations dimensionnelles et de résistance en compression des éprouvettes de bétons obtenues selon l'une de ces méthodes d'application du produit hydrofuge par rapport à un béton de référence lequel ne comprend pas d'hydrofuge sont présentés dans le tableau [Tableau] qui suit.

Les variations dimensionnelles sont mesurées sur des plaques de 10 cm de large, 40 cm de long et 2 cm d'épaisseur dans les conditions de la norme NF EN 772-14 à un âge de 14 jours. Elles correspondent à la somme du retrait mesuré après 21 jours en étuve ventilée à 33 °C et du gonflement mesuré après 4 jours dans l'eau à 20 °C.

La résistance en compression est mesurée sur cube de 10 cm de côté.

Les résultats sont comparés à une formulation de référence constituée de 8 % de ciment CEM I 52,5 N, 42 % de sable de ponce, 28 % de gravillons de ponce et 22 % d'eau.

Les formulations des exemples 1, 2 et 3 sont identiques à la référence, excepté l'ajout d'hydrofuge.

La formulation 4 est identique à la référence, excepté l'ajout d'hydrofuge et substitution de 16 % du ciment CEM 52,5 N par du ciment sulfo-alumineux.

**[Tableau]**

| | Exemple 1 | Exemple 2 | Exemple 3 | Exemple 4 |
|---|---|---|---|---|
| % massique d'hydrofuge par rapport aux granulats | 0,28% | 0,99% | 1,04% | 1,02% |
| Méthode d'incorporation de l'hydrofuge | Mélange | Mélange | Imprégnation | Imprégnation |
| % massique de ciment sulfo-alumineux dans le liant | 0% | 0% | 0% | 16% |
| Ecart relatif de variations dimensionnelles par rapport au béton de référence | -25% | -30% | -15% | -27% |
| Ecart relatif de résistance en compression par rapport au béton de référence | 13% | -2% | -10% | -9% |

Les exemples 1 et 2 se rapportent à des blocs de béton réalisés selon l'alternative de mélange (mélange hydrofuge / béton frais ») tandis que les exemples 3 et 4 se rapportent à des blocs de bétons obtenus selon l'alternative d'imprégnation (« imprégnation ou enrobage »).

Il peut être constaté que l'utilisation d'un produit hydrofuge appliqué au préalable sur les granulats ou ajouté directement dans le béton lors du mélange permet de réduire de manière significative les variations dimensionnelles induites par les variations d'hygrométrie et/ou de température obtenus tout en conservant une résistance mécanique globalement satisfaisante des blocs de béton réalisés (exemples 1 et 2) ou du moins globalement acceptables (exemples 3 et 4).

L'invention est décrite dans ce qui précède à titre d'exemple. Il est entendu que l'homme du métier est à même de réaliser différentes variantes de réalisation de l'invention sans pour autant sortir du cadre de l'invention.

## Revendications

1. Procédé de réalisation d'un béton à démoulage immédiat comprenant un liant, des granulats et de l'eau, ledit procédé comprenant les étapes suivantes :
(i) imprégnation des granulats avec un produit hydrofuge,
(ii) mélange des granulats imprégnés avec le liant et l'eau,
(iii) mise en place dans un moule par vibro-compactage et démoulage immédiat du béton.

2. Procédé de réalisation d'un béton à démoulage immédiat comprenant un liant, des granulats et de l'eau, ledit procédé comprenant les étapes suivantes :
(i) mélange des granulats avec le liant,
(ii) mélange d'un produit hydrofuge avec l'eau et la composition obtenue à l'étape (i),
(iii) mise en place dans un moule par vibro-compactage et démoulage immédiat du béton.

3. Procédé de réalisation d'un béton à démoulage immédiat selon la revendication 1, **caractérisé en ce que**, préalablement à l'étape d'imprégnation, les granulats sont partiellement saturés en eau.

4. Procédé de réalisation d'un béton à démoulage immédiat selon la revendication 3, **caractérisé en ce que** les granulats sont saturés en eau à hauteur d'au moins 50% de leur capacité d'absorption d'eau.

5. Procédé de réalisation d'un béton à démoulage immédiat selon les revendications 1, 3 ou 4, **caractérisé en ce que** l'imprégnation des granulats avec le produit hydrofuge est réalisée sans opération de chauffage.

6. Procédé de réalisation d'un béton à démoulage immédiat selon la revendication 2, **caractérisé en ce que** l'eau et le produit hydrofuge sont ajoutés simultanément à la composition obtenue à l'étape (i).

7. Procédé de réalisation d'un béton à démoulage immédiat selon l'une quelconque des revendications précédentes, **caractérisé en ce que** le produit hydrofuge est ajouté selon une proportion massique de 0,2 à 1,5 % par rapport aux granulats.

8. Procédé de réalisation d'un béton à démoulage immédiat selon l'une quelconque des revendications précédentes, **caractérisé en ce que** les granulats sont des granulats ayant un coefficient d'absorption d'eau élevé.

9. Procédé de réalisation d'un béton à démoulage immédiat selon l'une quelconque des revendications précédentes, **caractérisé en ce que** les granulats sont des granulats de ponce ou pouzzolane ou des granulats recyclés.

10. Procédé de réalisation d'un béton à démoulage immédiat selon l'une quelconque des revendications précédentes, **caractérisé en ce que** le liant comprend 5 à 35% en masse sèche de ciment sulfo-alumineux.

11. Produit en béton à démoulage immédiat obtenu selon le procédé de réalisation selon l'une quelconque des revendications 1, 3 à5 ou 7 à 10 ou selon le procédé de réalisation selon l'une quelconque des revendications 2, 6 ou 7 à 10.
